(19) Europäisches Patentamt
European Patent Office
Office européen des brevets

(11) **EP 2 451 164 B1**

(12) **EUROPEAN PATENT SPECIFICATION**

(45) Date of publication and mention
of the grant of the patent:
**03.05.2017 Bulletin 2017/18**

(51) Int Cl.:
***H04N 13/00*** *(2006.01)*    ***G06T 15/20*** *(2011.01)*

(21) Application number: **10190368.0**

(22) Date of filing: **08.11.2010**

(54) **Improved view synthesis**

Verbesserte Ansichtssynthese

Synthèse à vue améliorée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.05.2012 Bulletin 2012/19**

(73) Proprietor: **Telefonaktiebolaget LM Ericsson (publ)**
**164 83 Stockholm (SE)**

(72) Inventors:
• **Rusert, Thomas**
**SE-164 46, Kista (SE)**
• **Xu, Sanbao**
**SE-226 48, Lund (SE)**

(74) Representative: **Ericsson**
**Patent Development**
**Torshamnsgatan 21-23**
**164 80 Stockholm (SE)**

(56) References cited:
**WO-A1-2010/037512**

• **CARLOS VASQUEZ ET AL: "3D-TV: coding of disocclusions for 2D+depth representation of multi-view images", PROCEEDINGS OF THE TENTH IASTED INTERNATIONAL CONFERENCE ON COMPUTER GRAPHICS & IMAGING : FEBRUARY 13 - 15, 2008, INNSBRUCK, AUSTRIA, ANAHEIM, CALIF. [U.A.] : ACTA PRESS, US, 13 February 2008 (2008-02-13), pages 26-33, XP008135227, ISBN: 978-0-88986-719-2**

**Description**

TECHNICAL FIELD

The present disclosure relates to identifying occlusion and disocclusion in view synthesis of a 3D scene.

BACKGROUND

3D Video or 3D TV has gained increased momentum in recent years. A number of standardization bodies such as ITU, EBU, SMPTE, MPEG, and DVB as well as other international groups (e.g. DTG, SCTE), are working toward standards for 3D TV or Video. In this work, several 3D video coding schemes have been proposed. Among the suggested schemes are Video plus Depth (V+D), Multiview Video (MVV), Multiview Video plus Depth (MVD), Layered Depth Video (LDV), and Depth Enhanced Video (DES).

In multiview video (e.g. for autostereoscopic displays), a number of view points (typically 8 or 9) are required at the receiver side. As the skilled person realizes, transmitting data representing all of these view points over the channel or network demands very much bandwidth (i.e. high bit rates), and is hence less practical. Therefore, it is desirable to send only a small number of view points (e.g. 2 or 3) to the receiver side, while the other view points that are necessary to meet viewer requirements are synthesized at the receiver side.

Similarly, in free viewpoint 3D TV or video, the number of view points that need to be available at the receiver side is very large, since it depends on the position or viewing angle of the viewer relative to the display. So it is not very feasible to transmit all the possible view points from the sender. The only sensible way is to synthesize many virtual view points from a limited number of view points that are sent over the channel/network that connects the source with the receiver. As a consequence of this fact, view synthesis has become a key technology involved in multiview or free viewpoint 3D video, as well as image-based rendering.

The most basic way in which to perform view synthesis is by linear interpolation of one or more reference view points. A left camera and a right camera along a baseline provide reference view points. A parameter (ratio) determines position of a virtual camera between the left and right camera. A virtual pixel in a synthesized view point is then calculated by a simple linear interpolation procedure. However, a drawback with such simple view synthesis is that it is not capable of handling situations involving 3D objects that occlude surrounding areas. That is, a major challenge in view synthesis is to detect and deal with occlusion areas in synthesized images.

For example, WO 2009/001255 describes encoding and decoding of a 3D video signal. An occlusion map and a depth map are used as input to a coding system where occlusion information is classified into functional or non-functional data, in order to enable efficient coding of occlusion data, resulting in a reduction of the number of bits that need to be transmitted.

Needless to say, there are numerous works dealing with occlusion detection in the prior art, in the areas of 3D video, video motion analysis and stereo analysis. One method is the so called photometry-based estimation of occlusions, which is based on the predicted intensity error (intensity matching error, or motion-compensated prediction error). However, a drawback with this method is that the reference frame pixels that disappear, i.e. occluded pixels, cannot be accurately matched in the target frame, i.e. the synthesized view point, and thus significant errors are induced. Other methods estimate occlusion in a more geometry-based manner. Furthermore, common to most of the previous occlusion detection methods is that they employ some kind of "smart" search mechanism that works on original and synthesized images by searching for occluded and disoccluded pixels. A drawback with such methods is that they are sensitive to noise and also depend on the video content.

The prior art further comprises calculation of disocclusion areas such as CARLOS VASQUEZ ET AL: "3D-TV: coding of disocclusions for 2D+depth representation of multi-view images", PROCEEDINGS OF THE TENTH IASTED INTERNATIONAL CONFERENCE ON COMPUTER GRAPHICS & IMAGING : FEBRUARY 13 - 15, 2008, INNSBRUCK, AUSTRIA, ANAHEIM, CALIF. [U.A.]: ACTA PRESS, US, 13 February 2008 (2008-02-13), pages 26-33, XP008135227, ISBN: 978-0-88986-719-2 and international patent application publication WO 2010/037512.

SUMMARY

It is an object to obviate at least some of the above drawbacks and provide an improved way of dealing with occlusion and disocclusion in view synthesis. The invention is defined by the independent claims. The dependent claims define advantageous embodiments. In particular, according to the invention as defined by the claims, occluded or disoccluded pixels are calculated in a closed form from the 3D geometry of the depth change and the positions of the reference and virtual camera. An advantage of this is, since no search for occluded or disoccluded pixels is needed, that the sensitivity to noise is low and there is no dependence on the actual video content.

BRIEF DESCRIPTION OF THE DRAWINGS

Figure 1 a is a schematically illustrated side view of a 3D scene,
figure 1b is a schematically illustrated top view of the 3D scene of figure 1 a,
figure 1c is a schematically illustrated disocclusion map corresponding to the scene in figures 1 a and 1 b,
figure 2 is a flow chart of a method of controlling view synthesis,
figure 3 is a schematically illustrated block diagram of an apparatus for controlling view synthesis.

## DETAILED DESCRIPTION OF EMBODIMENTS

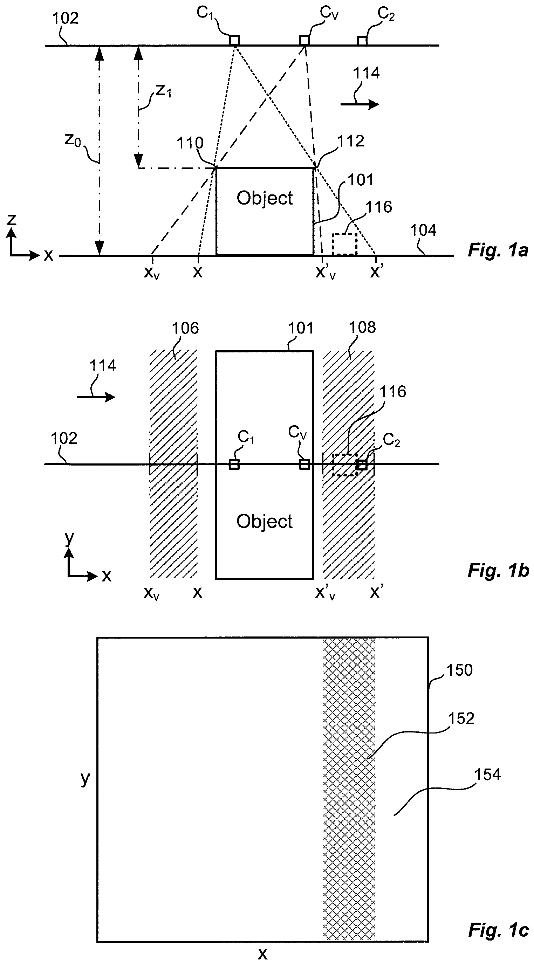

Now in some more detail, detection of occlusion and disocclusion in view synthesis will be described. Figures 1a and 1b illustrate a 3D scene with an object 101 on a background 104. A reference camera $C_1$ and a virtual (or synthetic) camera $C_v$ are aligned along a baseline 102. The reference camera $C_1$ is configured to record a reference view point and the synthetic camera $C_v$ is configured to record a synthetic view point. $C_2$ is a second (optional) reference camera that will be discussed below in connection with embodiments involving multiple reference views. Occlusion or disocclusion occurs near sudden changes of depth of objects in the scene. To facilitate the following discussion, the concepts of "depth jump" and "depth fall" are introduced, and their implication on occlusion and/or disocclusion.

Figure 1a shows depth discontinuities where "depth jump" 110 and "depth fall" 112 occur in the scene. On the left side of the object 101, there is a depth jump 110 where the depth goes from far to near in the direction from the reference camera $C_1$ to the virtual camera $C_v$ (so-called view synthesis, VS, direction 114). On the right side of the object there is a "depth fall" 112 where the depth goes from near to far in the VS direction 114. Both occlusion 106 and disocclusion 108 occur in the figure. The occurrence of occlusion or disocclusion always occurs at a depth change in the reference image, i.e. the image as recorded by the reference camera $C_1$. (With $C_2$ being the reference camera, the left side of the object is "depth fall", and the right side "depth jump".) For each of the lines from a camera to a discontinuity point in the scene, there are actually two lines, one from the object 101, the other from the background 104. The object pixel and the background pixel are neighboring each other in the reference image.

An algorithm will be described below that works by finding depth discontinuities, such as the discontinuities 110, 112, and mapping the edges of these discontinuities to the virtual view. The depth discontinuity detection can be done by using edge detection, e.g. computing the derivative of the depth map, and then applying thresholding. Pixels on either side of the edge are then mapped to the virtual view, e.g. by using standard geometry from view synthesis methods. The actual pixel values need not be synthesized; it is the position in the virtual view that is important. After this mapping, the pixels between these two edge pixels, exemplified in figures 1a and 1b with x' and x'$_v$, are identified as disoccluded. Correspondingly, edge pixels for the occluded region is exemplified in figures 1a and 1b with x and x$_v$.

As will be described in detail, edge detection for disocclusion detection may be performed by considering the difference of 1/d values (d = depth in the z-direction of figures 1a and 1b) of neighboring pixels, and to compare that difference with a derived threshold.

When the synthetic camera $C_v$ is far away, along the baseline 102, from the reference camera $C_1$, the disocclusion area 108 is quite large. If a new object 116 in the disocclusion area 108 (that is, a new object 116 being closer to the cameras than the background and hidden in the reference view) pops up in the synthetic view, more attention is needed. The new object 116 would be labeled as part of the disocclusion region 108. This is not wrong from the viewpoint of the reference view, but makes it difficult for a subsequent view synthesis process to fill in proper pixels, since the large disocclusion area 108 now composes of either a smaller one plus the new object or splits to two smaller disjoint regions plus the new object. In this case, it is feasible to use a second view (preferably close to the synthetic view) to improve the disocclusion handling.

Before describing embodiments of the different aspects as summarized above, a brief description will be made of the imaging process: the perspective projection from a 3D point onto the image plane, and the back projection from an image pixel to 3D world when the depth of the point is known.

Denote a 3D world point by $[X\ Y\ Z\ 1]^T$ and its image point by $[x\ y\ w]^T$. They are related by the following formula:

$$\begin{bmatrix} x \\ y \\ w \end{bmatrix} = \mathbf{P} \cdot \begin{bmatrix} X \\ Y \\ Z \\ 1 \end{bmatrix} = \mathbf{K} \cdot \mathbf{M} \cdot \begin{bmatrix} X \\ Y \\ Z \\ 1 \end{bmatrix} \qquad (1)$$

where $\mathbf{P}$ is a 3x4 matrix called the projection matrix of the camera, being the product of two matrices, a calibration matrix $\mathbf{K}$ encoding the intrinsic camera parameters, and a motion matrix $\mathbf{M}$ representing the extrinsic parameters of the camera. In turn,

$$\mathbf{K} = \begin{bmatrix} f_x & s & x_0 \\ 0 & f_y & y_0 \\ 0 & 0 & 1 \end{bmatrix} \qquad (2)$$

in which $f_x$ and $f_y$ are the "focal lengths" (in pixels) of the camera, $(x_0, y_0)$ is the principal point of the image plane, and s is the skew parameter of the camera.

$$\mathbf{M} = \begin{bmatrix} \mathbf{R} & \mathbf{T} \end{bmatrix} = \begin{bmatrix} r_{11} & r_{12} & r_{13} & T_X \\ r_{21} & r_{22} & r_{23} & T_Y \\ r_{31} & r_{32} & r_{33} & T_Z \end{bmatrix} \qquad (3)$$

in which $\mathbf{R} = [r_{ij}]_{3\times3}$ is the rotation matrix and $\mathbf{T} = [T_X\ T_Y$

$T_Z]^T$ is the translation vector.

In 2D image and video capturing, the depth information Z about the 3D point is lost, leaving us only the pixel position $(x, y)$ on the image. So after picture taking, it is impossible to go from a 2D image back to the 3D world. However, in 3D video, it is possible to estimate the depth from stereo or multiview images. Since the cameras used in 3D video capturing are all calibrated (i.e., all the camera parameters in **K** and **M,** and hence all the elements in the projection matrix **P** are known), equation (1) can be reversed by using the estimated depth value, namely, go back from $(x, y)$ and Z to (X, Y, Z).

Occlusion or disocclusion occurs near sudden changes of depth of objects in the image (depth change in the scene may not necessarily give rise to disocclusion or occlusion).

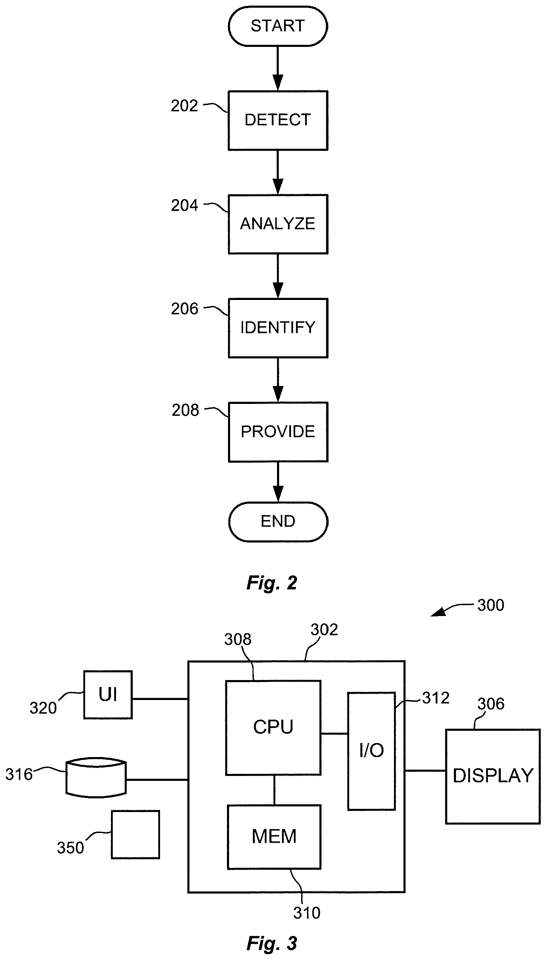

Turning now to figure 2 an embodiment of a method as summarized above will be described in some more detail. The input to the method is a 3D scene (e.g. texture, although a texture is not required), a depth map and camera information, and information about the virtual view to be synthesized (e.g. camera information for the synthesized view). The basic algorithm of the method is simple and fast and it is described with one input view. Embodiments involving multiple input views are described below.

The method commences with a detection step 202 in which discontinuities are detected in a depth map that comprises depth values corresponding to a view point of a reference camera. The detection comprises calculation of shifts for neighbouring pixels of the depth map, the shifts being associated with a change of viewpoint from the reference camera to a virtual camera.

That is, the discontinuities in the depth surface are detected, for example by first convolving the depth surface $z(x, y)$ with a 1 st order horizontal derivative filter $h(x, y)$, and then performing a thresholding operation on the depth derivative map. One example of such derivative filters is the Sobel filters:

$$h_1(x, y) = \begin{bmatrix} -1 & 0 & 1 \\ -2 & 0 & 2 \\ -1 & 0 & 1 \end{bmatrix} = Sobel_X \qquad (4)$$

Other alternative (even larger or smaller) filter candidates may also be used.

There is a better depth edge detection method under the assumption that the cameras are well aligned (to be exact, there is no rotation, the translation is horizontal only, and the cameras have the same intrinsic parameters). Suppose we have a value z (between $z_{near}$ and $z_{far}$), we can transform it into a disparity (or shift) s:

$$s = au * s_H / z - du, \qquad (5)$$

where $au$, $s_H$ and $du$ are given by the camera parameters: $au$ is the camera focal length, $s_H$ is the relative horizontal translation between the reference camera and the synthetic camera, and $du$ is the difference of the image centers between the reference camera and the synthetic camera. One way to derive equation (5) is to simplify the mapping process of a pixel in the reference view to the virtual view for a general camera setup, by incorporating the parallel camera conditions. The inverse of equation (1) and the re-projection will then be reduced to equation (5).

In some embodiments, the calculation of shifts for neighbouring pixels of the depth map comprises evaluation of differences of reciprocals of depth values for pixels of the depth map.

That is, noting that the difference between the shifts of two neighboring pixels (with depth values $z_0$ and $z_1$) may be expressed as:

$$s_0 - s_1 = au * s_H * (1/z_0 - 1/z_1) \qquad (6)$$

Then, the condition for disocclusion is that this difference is larger than a threshold T (shift difference in terms of pixels, or in other words, size of the hole) e.g. $T=1$. That means the condition for disocclusion is:

$$s_0 - s_1 = au * s_H * (1/z_0 - 1/z_1) > T \qquad (7)$$

or equivalently

$$1/z_0 - 1/z_1 > T / (au * s_H) \qquad (8)$$

Since T is given, $au$ and $s_H$ are given as well, the overall threshold is fixed and given by $T_1 = T / (au * s_H)$. Therefore, the detection simplifies to

$$1/z_0 - 1/z_1 > T_1 \qquad (9)$$

The advantage of this is that it is independent of the actual depth values $z_0$ and $z_1$. Since the physical meaning of $T$ in the formula $T_f = T / (au * s_H)$ is the size of the hole, it is possible to use it when selecting a value for the thresholding.

The method continues with an analysis step 204 in which the detected discontinuities are analyzed. This comprises identifying increase of depths associated with the change of viewpoint from the reference camera to the virtual camera.

That is, the discontinuities are classified into "jump" or "fall". A jump is a decrease in depth in the direction of the synthesis, and fall is an increase in depth. Only discontinuities of type "fall" result in disocclusion and other discontinuities need not be considered. Here the direction of view synthesis is defined as that of going from the reference camera to the synthetic camera (see e.g. figures 1a and 1b). With this classification, the method works in both cases: the synthetic camera is on the left and on the right of the reference camera.

The method continues with an identification step 206 in which areas of disocclusion associated with the viewpoint of the virtual camera are identified, the areas being delimited by positions of the identified increase of depths associated with the change of viewpoint from the reference camera to the virtual camera.

That is, the discontinuity pixels of type "fall" are projected, one from each side of the discontinuity, to the virtual view, and the pixels in the virtual view between each pair of discontinuity pixels are marked as being disoccluded.

In some embodiments, the method comprises analyzing the detected discontinuities, comprising identifying decrease of depths associated with the change of viewpoint from the reference camera to the virtual camera. These embodiments then continues with identifying areas of occlusion associated with the viewpoint of the virtual camera, the areas being delimited by positions of the identified decrease of depths associated with the change of viewpoint from the reference camera to the virtual camera, followed by combining the identified areas of occlusion with the identified areas of disocclusion, thereby reducing the areas of disocclusion.

That is, discontinuity points of type "jump" (resulting in occlusion) pixels may also be labeled or marked and projected to the virtual view. This may be used to reduce the size of an area marked as being disoccluded, i.e. by making it only up to the point of the projection of the higher edge in the jump. This is due to the fact that an objected that is uncovered (disoccluded) may become covered (occluded) by another object).

The method then provides the identified areas of disocclusion to a view synthesis process.

However, it is to be noted that the further use of the identified areas of disocclusion in the view synthesis process is outside the scope of the present disclosure and will hence not be described in more detail.

In some embodiments, the identification of areas of disocclusion comprises creating a disocclusion map in which the positions of the identified increase of depths are stored, and storing, in the disocclusion map at positions between pairs of positions of the identified increase of depths, values that represent disocclusion

This is illustrated with a disocclusion map 150 in figure 1c, where the hashed area 152 illustrates the disoccluded pixels seen by the synthetic camera $C_v$. Non-disocclusion (or "don't care") pixels 154 are white.

In the above, disocclusion detection has been discussed using a single view. However, embodiments include those where multiple views are utilized, where discontinuities are detected in a second depth map, said second depth map comprising depth values corresponding to a view point of a second reference camera. The detection comprises calculation of shifts for neighbouring pixels of the second depth map, the shifts being associated with a change of viewpoint from the second reference camera to the virtual camera. This is followed by analysis where the detected discontinuities in the second depth map are analyzed, comprising identifying increase of depths associated with the change of viewpoint from the second reference camera to the virtual camera. Areas of disocclusion associated with the viewpoint of the virtual camera are then identified, the areas being delimited by positions of the identified increase of depths associated with the change of viewpoint from the second reference camera to the virtual camera, and finally the disocclusion areas identified in relation to the reference camera and the second reference camera are merged.

Of course, embodiments include those that involve more than two cameras, i.e. the method may be extended to involve any number N cameras, e.g. N = 9.

Similar to the embodiments involving one view, in the embodiments involving multiple views the calculation of shifts for neighbouring pixels of the second depth map may comprise evaluation of differences of reciprocals of depth values for pixels of the second depth map.

Such multiple view embodiments may further comprise analyzing the detected discontinuities in the second depth map, comprising identifying decrease of depths associated with the change of viewpoint from the second reference camera to the virtual camera, identifying areas of occlusion associated with the viewpoint of the virtual camera, the areas being delimited by positions of the identified decrease of depths associated with the change of viewpoint from the second reference camera to the virtual camera, and combining the identified areas of occlusion with the identified areas of disocclusion, thereby reducing the areas of disocclusion.

That is, disocclusion detection may be applied individually between each view and the virtual view, resulting in multiple disocclusion maps. These disocclusion maps may then be joined in a logical 'and' manner. If a pixel in the virtual view is marked as being disoccluded in all disocclusion maps, it is marked as being disoccluded in the final map. Otherwise it is not marked as being disoccluded. This results in the following steps for a two view scenario: calculation of the disocclusion map D1 from the first depth map to the synthetic view, calculation of the disocclusion map D2 from the second depth map to the synthetic view, and a merger of D1 and D2 to obtain the final (total) disocclusion map, e.g. by using a logical "and" between D1 and D2.

A synthetic view may typically be synthesized for a fixed camera position. But, it is also possible to make dynamic view synthesis by changing the synthetic camera position with time, thus achieving FTV (Free Viewpoint TV). This is done by varying the camera position of the synthetic camera with the time (i.e. the frame index number) in the loop of video frames, either according to a pre-defined path of camera movement, or according to the feedback from the viewer (e.g. by following the head movement of the viewer).

Further embodiments include those, where the identification of areas of disocclusion comprises creating a disocclusion map in which the positions of the identified increase of depths are stored, projecting the positions of the identified increase of depths to a 3D coordinate system, performing a position transformation by performing any of rotation and translation of the positions in the 3D coordinate system, the amount of rotation and translation being dependent on the relative position between the reference camera and the virtual camera, projecting the transformed positions back to a 2D coordinate system, and storing, in the disocclusion map at positions between pairs of back projected positions of the identified increase of depths, values that represent disocclusion.

That is, whereas the embodiments described above can be seen as assuming a somewhat strict camera configuration such that the resulting views are geometrically rectified. This enables a simple and fast algorithm for disocclusion detection. However, in general, the cameras may be loosely configured, such as there being a 3D rotation between them or the cameras having a non-horizontal shift. If such a camera configuration is not rectified, then the epipolar lines are not horizontal if there is a rotation, or the corresponding pixels may be located on different image rows if there is an offset in the camera heights. In these cases, it is possible to use the 2D-3D-2D (back-projection from the reference view to 3D and re-projection from 3D to the virtual view) approach.

The steps of such a procedure are similar to the steps described above. But, the pixel mapping operation is replaced by first back projecting the detected pixels (at depth discontinuities) in the reference depth map(s) to the 3D world, then re-projecting the 3D points to the synthesized view, by using the reverse equation of eq. (1) and the camera parameters of the cameras involved.

Turning now to figure 3, an embodiment of the present disclosure in the form of an apparatus 300 will be described. The apparatus 300 comprises processing and memory circuitry 302 that comprises a processor 308, memory circuitry 310 and input/output interfacing circuitry 312. Connected to these 308, 310, 312 are a user interface unit 320, a storage unit 316 and a display unit 306. As the skilled person will realize, the apparatus 300 is illustrated in a somewhat general form. As such, all of or parts of the apparatus 300 may be in the form of a computer, TV or any similar device, including mobile devices such as mobile communication devices capable of operating in a mobile communication system.

The apparatus 300 is for controlling view synthesis of a 3D scene and the processing and memory circuitry 308,310,312 comprises discontinuity detecting circuitry, analysis circuitry, identification circuitry and provision circuitry, all or parts of which may be distributed between the processor 308, the memory circuitry 310 and the input/output interfacing circuitry 312.

The discontinuity detecting circuitry is configured to detect discontinuities in a depth map, the depth map comprising depth values corresponding to a view point of a reference camera. The detection comprises calculation of shifts for neighbouring pixels of the depth map, the shifts being associated with a change of viewpoint from the reference camera to a virtual camera. The analysis circuitry is configured to analyze the detected discontinuities, comprising identifying increase of depths associated with the change of viewpoint from the reference camera to the virtual camera. The identification circuitry is configured to identify areas of disocclusion associated with the viewpoint of the virtual camera, the areas being delimited by positions of the identified increase of depths associated with the change of viewpoint from the reference camera to the virtual camera, and the provision circuitry is configured to provide the identified areas of disocclusion to view synthesis processing circuitry.

The apparatus 300 is controlled by software instructions stored in the memory circuitry 310 and executed by the processor 308. Such software instructions may be provided on any suitable computer readable medium 350, and include a computer program for controlling view synthesis of a 3D scene, comprising software instructions that, when executed by a computer, performs detecting discontinuities in a depth map that comprises depth values corresponding to a view point of a reference camera. The software instructions that performs the detection comprises instructions that performs calculation of shifts for neighbouring pixels of the depth map, the shifts being associated with a change of viewpoint from the reference camera to a virtual camera. The detected discontinuities are then analyzed by software instructions that comprise instructions that perform identifying increase of depths associated with the change of viewpoint from the reference camera to the virtual camera. Areas of disocclusion associated with the viewpoint of the virtual camera are then identified, the areas being delimited by positions of the identified increase of depths associated with the change of viewpoint from the reference camera to the virtual camera. The identified areas of disocclusion are then provided to a view synthesis process.

In summary, advantages provided by the method, arrangement and computer program as described above may be summarized as follows.

Since occlusion or disocclusion areas are detected in the synthesized view directly, synthesis of the virtual view (disocclusion detection is decoupled from the view synthesis process) is not required. Only few projections are made giving the algorithm of the method low complexity. There is also a new way to do edge detection for disocclusion detection and to determine the thresholding in depth edge detection, by considering the difference of inverse of depth values of neighboring pixels, and to compare that difference with the derived threshold.

Furthermore, multiple views may be used to improve the disocclusion handling, to deal with appearance of new objects (or slanted surfaces) in the detected disoccluded area. Variable synthetic views are also possible by varying the camera position of the synthetic camera with the time.

**Claims**

1. A method of controlling view synthesis of a 3D scene, the method comprising:

   - detecting (202) discontinuities in a depth map, said depth map comprising depth values corresponding to a view point of a reference camera ($C_1$), said detection comprising calculation of shifts for neighbouring pixels of the depth map, the shifts being associated with a change of viewpoint from the reference camera to a virtual camera ($C_v$),
   - analyzing (204) the detected discontinuities, comprising identifying increase of depths associated with the change of viewpoint from the reference camera to the virtual camera,
   - identifying (206) areas of disocclusion (108) associated with the viewpoint of the virtual camera, the areas being delimited by positions of the identified increase of depths associated with the change of viewpoint from the reference camera to the virtual camera, **characterized by**

      - analyzing the detected discontinuities, comprising identifying decrease of depths associated with the change of viewpoint from the reference camera to the virtual camera,

   - identifying areas of occlusion (106) associated with the viewpoint of the virtual camera, the areas being delimited by positions of the identified decrease of depths associated with the change of viewpoint from the reference camera to the virtual camera,
   - combining the identified areas of occlusion with the identified areas of disocclusion, thereby reducing the areas of disocclusion, and
   - providing (208) the result of the combination to a view synthesis process.

2. The method of claim 1, wherein the calculation of shifts for neighbouring pixels of the depth map comprises evaluation of differences of reciprocals of depth values for pixels of the depth map.

3. The method of claim 1 or 2, further comprising:

   - detecting discontinuities in a second depth map, said second depth map comprising depth values corresponding to a view point of a second reference camera, said detection comprising calculation of shifts for neighbouring pixels of the second depth map, the shifts being associated with a change of viewpoint from the second reference camera to the virtual camera,
   - analyzing the detected discontinuities in the second depth map, comprising identifying increase of depths associated with the change of viewpoint from the second reference camera to the virtual camera,
   - identifying areas of disocclusion associated with the viewpoint of the virtual camera, the areas being delimited by positions of the identified increase of depths associated with the change of viewpoint from the second reference camera to the virtual camera, and
   - merging the disocclusion areas identified in relation to the reference camera and the second reference camera.

4. The method of claim 3, wherein the calculation of shifts for neighbouring pixels of the second depth map comprises evaluation of differences of reciprocals of depth values for pixels of the second depth map.

5. The method of claim 3 or 4, further comprising:

   - analyzing the detected discontinuities in the second depth map, comprising identifying decrease of depths associated with the change of viewpoint from the second reference camera to the virtual camera,
   - identifying areas of occlusion associated with the viewpoint of the virtual camera, the areas being delimited by positions of the identified decrease of depths associated with the change of viewpoint from the second reference camera to the virtual camera, and
   - combining the identified areas of occlusion with the identified areas of disocclusion, thereby reducing the areas of disocclusion.

6. The method of any of claims 1 to 5, wherein the identification of areas of disocclusion comprises:

   - creating a disocclusion map (150) in which the positions of the identified increase of depths are stored, and
   - storing, in the disocclusion map at positions between pairs of positions of the identified increase of depths, values that represent disocclusion.

7. The method of any of claims 1 to 5, wherein the identification of areas of disocclusion comprises:

   - creating a disocclusion map in which the positions of the identified increase of depths are stored,
   - projecting the positions of the identified increase of depths to a 3D coordinate system,

- performing a position transformation by performing any of rotation and translation of the positions in the 3D coordinate system, the amount of rotation and translation being dependent on the relative position between the reference camera and the virtual camera,

- projecting the transformed positions back to a 2D coordinate system,

- storing, in the disocclusion map at positions between pairs of back projected positions of the identified increase of depths, values that represent disocclusion.

8. A computer program for controlling view synthesis of a 3D scene, comprising software instructions that, when executed by a computer, performs:

- detecting (202) discontinuities in a depth map, said depth map comprising depth values corresponding to a view point of a reference camera, said detection comprising calculation of shifts for neighbouring pixels of the depth map, the shifts being associated with a change of viewpoint from the reference camera to a virtual camera,

- analyzing (204) the detected discontinuities, comprising identifying increase of depths associated with the change of viewpoint from the reference camera to the virtual camera,

- identifying (206) areas of disocclusion associated with the viewpoint of the virtual camera, the areas being delimited by positions of the identified increase of depths associated with the change of viewpoint from the reference camera to the virtual camera, **characterized by**

- analyzing the detected discontinuities, comprising identifying decrease of depths associated with the change of viewpoint from the reference camera to the virtual camera,

- identifying areas of occlusion (106) associated with the viewpoint of the virtual camera, the areas being delimited by positions of the identified decrease of depths associated with the change of viewpoint from the reference camera to the virtual camera,

- combining the identified areas of occlusion with the identified areas of disocclusion, thereby reducing the areas of disocclusion, and

- providing (208) the result of the combination to a view synthesis process.

9. An apparatus (300) for controlling view synthesis of a 3D scene, comprising processing and memory circuitry (308, 310, 312) configured to:

- detect discontinuities in a depth map, said depth map comprising depth values corresponding to a view point of a reference camera, said detection comprising calculation of shifts for neighbouring pixels of the depth map, the shifts being associated with a change of viewpoint from the reference camera to a virtual camera,

- analyze the detected discontinuities, comprising identifying increase of depths associated with the change of viewpoint from the reference camera to the virtual camera,

- identify areas of disocclusion associated with the viewpoint of the virtual camera, the areas being delimited by positions of the identified increase of depths associated with the change of viewpoint from the reference camera to the virtual camera, **characterized by** being further configured to

- analyze the detected discontinuities, comprising identifying decrease of depths associated with the change of viewpoint from the reference camera to the virtual camera,

- identify areas of occlusion (106) associated with the viewpoint of the virtual camera, the areas being delimited by positions of the identified decrease of depths associated with the change of viewpoint from the reference camera to the virtual camera,

- combine the identified areas of occlusion with the identified areas of disocclusion, thereby reducing the areas of disocclusion, and

- provide the result of the combination to view synthesis processing circuitry.

**Patentansprüche**

1. Verfahren zur Steuerung von Ansichtssynthese einer 3D-Szene, wobei das Verfahren umfasst:

- Erkennen (202) von Unterbrechungen in einer Tiefenkarte, wobei die Tiefenkarte Tiefenwerte umfasst, die einem Gesichtspunkt einer Referenzkamera ($C_1$) entsprechen, die Erkennung Berechnung von Verschiebungen für Nachbarpixel der Tiefenkarte umfasst, die Verschiebungen mit einem Wechsel des Gesichtspunkts von der Referenzkamera zu einer virtuellen Kamera ($C_v$) assoziiert sind,

- Analysieren (204) der erkannten Unterbrechungen, umfassend ein Identifizieren einer Zunahme von Tiefen, die mit dem Wechsel des Gesichtspunkts von der Referenzkamera zur virtuellen Kamera assoziiert ist,

- Identifizieren (206) von Desokklusionsbereichen (108), die mit dem Gesichtspunkt der virtuellen Kamera assoziiert sind, wobei die Bereiche durch Positionen der identifizierten Zunahme von Tiefen begrenzt werden, die mit dem Wechsel des Gesichtspunkts von der Referenzkamera zur virtuellen Kamera assoziiert ist,

**gekennzeichnet durch**

- Analysieren der erkannten Unterbrechungen, umfassend ein Identifizieren einer Abnahme von Tiefen, die mit dem Wechsel des Gesichtspunkts von der Referenzkamera zur virtuellen Kamera assoziiert ist,
- Identifizieren von Okklusionsbereichen (106), die mit dem Gesichtspunkt der virtuellen Kamera assoziiert sind, wobei die Bereiche **durch** Positionen der identifizierten Abnahme von Tiefen begrenzt werden, die mit dem Wechsel des Gesichtspunkts von der Referenzkamera zur virtuellen Kamera assoziiert ist,
- Kombinieren der identifizierten Okklusionsbereiche mit den identifizierten Desokklusionsbereichen, um **dadurch** die Desokklusionsbereiche zu verringern, und
- Bereitstellen (208) des Ergebnisses der Kombination für einen Ansichtssyntheseprozess.

2. Verfahren nach Anspruch 1, wobei die Berechnung von Verschiebungen für Nachbarpixel der Tiefenkarte eine Beurteilung von Differenzen von Kehrwerten von Tiefenwerten für Pixel der Tiefenkarte umfasst.

3. Verfahren nach Anspruch 1 oder 2, ferner umfassend:

- Erkennen von Unterbrechungen in einer zweiten Tiefenkarte, wobei die zweite Tiefenkarte Tiefenwerte umfasst, die einem Gesichtspunkt einer zweiten Referenzkamera entsprechen, die Erkennung Berechnung von Verschiebungen für Nachbarpixel der zweiten Tiefenkarte umfasst, die Verschiebungen mit einem Wechsel des Gesichtspunkts von der zweiten Referenzkamera zur virtuellen Kamera assoziiert sind,
- Analysieren der erkannten Unterbrechungen in der zweiten Tiefenkarte, umfassend ein Identifizieren einer Zunahme von Tiefen, die mit dem Wechsel des Gesichtspunkts von der zweiten Referenzkamera zur virtuellen Kamera assoziiert ist,
- Identifizieren von Desokklusionsbereichen, die mit dem Gesichtspunkt der virtuellen Kamera assoziiert sind, wobei die Bereiche durch Positionen der identifizierten Zunahme von Tiefen begrenzt werden, die mit dem Wechsel des Gesichtspunkts von der zweiten Referenzkamera zur virtuellen Kamera assoziiert ist, und
- Vereinigen der Desokklusionsbereiche, die in Bezug auf die Referenzkamera und die zweite Referenzkamera identifiziert werden.

4. Verfahren nach Anspruch 3, wobei die Berechnung von Verschiebungen für Nachbarpixel der zweiten Tiefenkarte eine Beurteilung von Differenzen von Kehrwerten von Tiefenwerten für Pixel der zweiten Tiefenkarte umfasst.

5. Verfahren nach Anspruch 3 oder 4, ferner umfassend:

- Analysieren der erkannten Unterbrechungen in der zweiten Tiefenkarte, umfassend ein Identifizieren einer Abnahme von Tiefen, die mit dem Wechsel des Gesichtspunkts von der zweiten Referenzkamera zur virtuellen Kamera assoziiert ist,
- Identifizieren von Okklusionsbereichen, die mit dem Gesichtspunkt der virtuellen Kamera assoziiert sind, wobei die Bereiche durch Positionen der identifizierten Abnahme von Tiefen begrenzt werden, die mit dem Wechsel des Gesichtspunkts von der zweiten Referenzkamera zur virtuellen Kamera assoziiert ist, und
- Kombinieren der identifizierten Okklusionsbereiche mit den identifizierten Desokklusionsbereichen, um dadurch die Desokklusionsbereiche zu verringern.

6. Verfahren nach einem der Ansprüche 1 bis 5, wobei die Identifizierung von Desokklusionsbereichen umfasst:

- Erstellen einer Desokklusionskarte (150), in welcher die Positionen der identifizierten Zunahme von Tiefen gespeichert werden, und
- Speichern von Werten, welche Desokklusion darstellen, in der Desokklusionskarte in Positionen zwischen Paaren von Positionen der identifizierten Zunahme von Tiefen.

7. Verfahren nach einem der Ansprüche 1 bis 5, wobei die Identifizierung von Desokklusionsbereichen umfasst:

- Erstellen einer Desokklusionskarte, in welcher die Positionen der identifizierten Zunahme von Tiefen gespeichert werden,
- Projizieren der Positionen der identifizierten Zunahme von Tiefe auf ein 3D-Koordinatensystem,
- Durchführen einer Positionstransformation durch Durchführen jeglicher von Rotation und Translation der Position im 3D-Koordinatensystem, wobei das Ausmaß von Rotation und Translation von der relativen Position zwischen der Referenzkamera und der virtuellen Kamera abhängt,

- Zurückprojizieren der transformierten Positionen auf ein 2D-Koordinatensystem,

- Speichern von Werten, welche Desokklusion darstellen, in der Desokklusionskarte in Positionen zwischen Paaren von zurückprojizierten Positionen der identifizierten Zunahme von Tiefen.

8. Computerprogramm zum Steuern von Ansichtssynthese einer 3D-Szene, umfassend Softwareanweisungen, die bei Ausführung durch einen Computer Folgendes ausführen:

- Erkennen (202) von Unterbrechungen in einer Tiefenkarte, wobei die Tiefenkarte Tiefenwerte umfasst, die einem Gesichtspunkt einer Referenzkamera entsprechen, die Erkennung Berechnung von Verschiebungen für Nachbarpixel der Tiefenkarte umfasst, die Verschiebungen mit einem Wechsel des Gesichtspunkts von der Referenzkamera zu einer virtuellen Kamera assoziiert sind,

- Analysieren (204) der erkannten Unterbrechungen, umfassend ein Identifizieren einer Zunahme von Tiefen, die mit dem Wechsel des Gesichtspunkts von der Referenzkamera zur virtuellen Kamera assoziiert ist,

- Identifizieren (206) von Desokklusionsbereichen, die mit dem Gesichtspunkt der virtuellen Kamera assoziiert sind, wobei die Bereiche durch Positionen der identifizierten Zunahme von Tiefen begrenzt werden, die mit dem Wechsel des Gesichtspunkts von der Referenzkamera zur virtuellen Kamera assoziiert ist,

**gekennzeichnet durch**

- Analysieren der erkannten Unterbrechungen, umfassend ein Identifizieren einer Abnahme von Tiefen, die mit dem Wechsel des Gesichtspunkts von der Referenzkamera zur virtuellen Kamera assoziiert ist,

- Identifizieren von Okklusionsbereichen (106), die mit dem Gesichtspunkt der virtuellen Kamera assoziiert sind, wobei die Bereiche **durch** Positionen der identifizierten Abnahme von Tiefen begrenzt werden, die mit dem Wechsel des Gesichtspunkts von der Referenzkamera zur virtuellen Kamera assoziiert ist,

- Kombinieren der identifizierten Okklusionsbereiche mit den identifizierten Desokklusionsbereichen, um **dadurch** die Desokklusionsbereiche zu verringern, und

- Bereitstellen (208) des Ergebnisses der Kombination für einen Ansichtssyntheseprozess.

9. Vorrichtung (300) zum Steuern von Ansichtssynthese einer 3D-Szene, umfassend Verarbeitungs- und Speicherschaltungsanordnung (308, 310, 312), die konfiguriert ist zum:

- Erkennen von Unterbrechungen in einer Tiefenkarte, wobei die Tiefenkarte Tiefenwerte umfasst, die einem Gesichtspunkt einer Referenzkamera entsprechen, die Erkennung Berechnung von Verschiebungen für Nachbarpixel der Tiefenkarte umfasst, die Verschiebungen mit einem Wechsel des Gesichtspunkts von der Referenzkamera zu einer virtuellen Kamera assoziiert sind,

- Analysieren der erkannten Unterbrechungen, umfassend ein Identifizieren einer Zunahme von Tiefen, die mit dem Wechsel des Gesichtspunkts von der Referenzkamera zur virtuellen Kamera assoziiert ist,

- Identifizieren von Desokklusionsbereichen, die mit dem Gesichtspunkt der virtuellen Kamera assoziiert sind, wobei die Bereiche durch Positionen der identifizierten Zunahme von Tiefen begrenzt werden, die mit dem Wechsel des Gesichtspunkts von der Referenzkamera zur virtuellen Kamera assoziiert ist,

**dadurch gekennzeichnet, dass** sie ferner konfiguriert ist zum:

- Analysieren der erkannten Unterbrechungen, umfassend ein Identifizieren einer Abnahme von Tiefen, die mit dem Wechsel des Gesichtspunkts von der Referenzkamera zur virtuellen Kamera assoziiert ist,

- Identifizieren von Okklusionsbereichen (106), die mit dem Gesichtspunkt der virtuellen Kamera assoziiert sind, wobei die Bereiche durch Positionen der identifizierten Abnahme von Tiefen begrenzt werden, die mit dem Wechsel des Gesichtspunkts von der Referenzkamera zur virtuellen Kamera assoziiert ist,

- Kombinieren der identifizierten Okklusionsbereiche mit den identifizierten Desokklusionsbereichen, um dadurch die Desokklusionsbereiche zu verringern, und

- Bereitstellen des Ergebnisses der Kombination für eine Schaltungsanordnung zur Ansichtssyntheseverarbeitung.

**Revendications**

1. Procédé de commande de synthèse de vues d'une scène 3D, le procédé comprenant :

- la détection (202) de discontinuités dans une carte de profondeur, ladite carte de profondeur comprenant des valeurs de profondeur correspondant à un point de vue d'une caméra de référence ($C_1$), ladite détection comprenant un calcul de déplacements de pixels voisins de la carte de profondeur, les déplacements étant associés à un changement de point de vue de la caméra de référence à une caméra virtuelle ($C_v$),

- l'analyse (204) des discontinuités détectées, comprenant l'identification d'une augmentation de profondeurs associées au changement de point de vue de la caméra de référence à la caméra virtuelle,

- l'identification (206) de zones de désocclusion (108) associées au point de vue de la caméra virtuelle, les zones étant délimitées par des positions de l'augmentation identifiée de profondeurs associées au changement de point de vue de la caméra de référence à la caméra virtuelle,

**caractérisé par**

- l'analyse des discontinuités détectées, comprenant l'identification d'une réduction de profondeurs associées au changement de point de vue de la caméra de référence à la caméra virtuelle,

- l'identification de zones d'occlusion (106) associées au point de vue de la caméra virtuelle, les zones étant délimitées par des positions de la réduction identifiée de profondeurs associées au changement de point de vue de la caméra de référence à la caméra virtuelle,

- la combinaison des zones identifiées d'occlusion avec les zones identifiées de désocclusion, en réduisant de ce fait les zones de désocclusion, et

- la fourniture (208) du résultat de la combinaison à un processus de synthèse de vues.

2. Procédé selon la revendication 1, dans lequel le calcul de déplacements de pixels voisins de la carte de profondeur comprend l'évaluation de différences de réciproques de valeurs de profondeur de pixels de la carte de profondeur.

3. Procédé selon la revendication 1 ou 2, comprenant en outre :

- la détection de discontinuités dans une deuxième carte de profondeur, ladite deuxième carte de profondeur comprenant des valeurs de profondeur correspondant à un point de vue d'une deuxième caméra de référence, ladite détection comprenant un calcul de déplacements de pixels voisins de la deuxième carte de profondeur, les déplacements étant associés à un changement de point de vue de la deuxième caméra de référence à la caméra virtuelle,

- l'analyse des discontinuités détectées dans la deuxième carte de profondeur, comprenant l'identification d'une augmentation de profondeurs associées au changement de point de vue de la deuxième caméra de référence à la caméra virtuelle,

- l'identification de zones de désocclusion associées au point de vue de la caméra virtuelle, les zones étant délimitées par des positions de l'augmentation identifiée de profondeurs associées au changement de point de vue de la deuxième caméra de référence à la caméra virtuelle, et

- la fusion des zones de désocclusion identifiées en relation avec la caméra de référence et la deuxième caméra de référence.

4. Procédé selon la revendication 3, dans lequel le calcul de déplacements de pixels voisins de la deuxième carte de profondeur comprend l'évaluation de différences de réciproques de valeurs de profondeur de pixels de la deuxième carte de profondeur.

5. Procédé selon la revendication 3 ou 4, comprenant en outre :

- l'analyse des discontinuités détectées dans la deuxième carte de profondeur, comprenant l'identification d'une réduction de profondeurs associées au changement de point de vue de la deuxième caméra de référence à la caméra virtuelle,

- l'identification de zones d'occlusion associées au point de vue de la caméra virtuelle, les zones étant délimitées par des positions de la réduction identifiée de profondeurs associées au changement de point de vue de la deuxième caméra de référence à la caméra virtuelle, et

- la combinaison des zones identifiées d'occlusion avec les zones identifiées de désocclusion, en réduisant de ce fait les zones de désocclusion.

6. Procédé selon l'une quelconque des revendications 1 à 5, dans lequel l'identification de zones de désocclusion comprend :

- la création d'une carte de désocclusion (150) dans laquelle les positions de l'augmentation identifiée de profondeurs sont mémorisées, et

- la mémorisation, dans la carte de désocclusion à des positions entre des paires de positions de l'augmentation identifiée de profondeurs, de valeurs représentant une désocclusion.

7. Procédé selon l'une quelconque des revendications 1 à 5, dans lequel l'identification de zones de désocclusion comprend :

- la création d'une carte de désocclusion dans laquelle les positions de l'augmentation identifiée de profondeurs sont mémorisées,
- la projection des positions de l'augmentation identifiée de profondeurs dans un système de coordonnées 3D,
- l'exécution d'une transformation de position par l'exécution de l'une quelconque d'une rotation et d'une translation des positions dans le système de coordonnées 3D, la quantité de rotation et de translation dépendant de la position relative entre la caméra de référence et la caméra virtuelle,
- la rétroprojection des positions transformées dans un système de coordonnées 2D,
- la mémorisation, dans la carte de désocclusion à des positions entre des paires de positions rétroprojetées de l'augmentation identifiée de profondeurs, de valeurs représentant une désocclusion.

8. Programme informatique de commande de synthèse de vues d'une scène 3D, comprenant des instructions logicielles qui, lorsqu'elles sont exécutées par un ordinateur, effectuent :

- la détection (202) de discontinuités dans une carte de profondeur, ladite carte de profondeur comprenant des valeurs de profondeur correspondant à un point de vue d'une caméra de référence, ladite détection comprenant un calcul de déplacements de pixels voisins de la carte de profondeur, les déplacements étant associés à un changement de point de vue de la caméra de référence à une caméra virtuelle,
- l'analyse (204) des discontinuités détectées, comprenant l'identification d'une augmentation de profondeurs associées au changement de point de vue de la caméra de référence à la caméra virtuelle,
- l'identification (206) de zones de désocclusion associées au point de vue de la caméra virtuelle, les zones étant délimitées par des positions de l'augmentation identifiée de profondeurs associées au changement de point de vue de la caméra de référence à la caméra virtuelle,

**caractérisé par**

- l'analyse des discontinuités détectées, comprenant l'identification d'une réduction de profondeurs associées au changement de point de vue de la caméra de référence à la caméra virtuelle,
- l'identification de zones d'occlusion (106) associées au point de vue de la caméra virtuelle, les zones étant délimitées par des positions de la réduction identifiée de profondeurs associées au changement de point de vue de la caméra de référence à la caméra virtuelle,
- la combinaison des zones identifiées d'occlusion avec les zones identifiées de désocclusion, en réduisant de ce fait les zones de désocclusion, et
- la fourniture (208) du résultat de la combinaison à un processus de synthèse de vues.

9. Appareil (300) de commande de synthèse de vues d'une scène 3D, comprenant une circuiterie de traitement et de mémoire (308, 310, 312) configurée pour effectuer :

- la détection de discontinuités dans une carte de profondeur, ladite carte de profondeur comprenant des valeurs de profondeur correspondant à un point de vue d'une caméra de référence, ladite détection comprenant un calcul de déplacements de pixels voisins de la carte de profondeur, les déplacements étant associés à un changement de point de vue de la caméra de référence à une caméra virtuelle,
- l'analyse des discontinuités détectées, comprenant l'identification d'une augmentation de profondeurs associées au changement de point de vue de la caméra de référence à la caméra virtuelle,
- l'identification de zones de désocclusion associées au point de vue de la caméra virtuelle, les zones étant délimitées par des positions de l'augmentation identifiée de profondeurs associées au changement de point de vue de la caméra de référence à la caméra virtuelle,

**caractérisé en ce qu'**il est en outre configuré pour effectuer :

- l'analyse des discontinuités détectées, comprenant l'identification d'une réduction de profondeurs associées au changement de point de vue de la caméra de référence à la caméra virtuelle,
- l'identification de zones d'occlusion (106) associées au point de vue de la caméra virtuelle, les zones étant délimitées par des positions de la réduction identifiée de profondeurs associées au changement de point de vue de la caméra de référence à la caméra virtuelle,
- la combinaison des zones identifiées d'occlusion avec les zones identifiées de désocclusion, en réduisant de ce fait les zones de désocclusion, et
- la fourniture du résultat de la combinaison à une circuiterie de traitement de synthèse de vues.

Fig. 1a

Fig. 1b

Fig. 1c

START

202 — DETECT

204 — ANALYZE

206 — IDENTIFY

208 — PROVIDE

END

***Fig. 2***

300

302

308

320 — UI

316 —

350 —

CPU

MEM

I/O — 312

DISPLAY — 306

310

***Fig. 3***

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009001255 A

### Non-patent literature cited in the description

- 3D-TV: coding of disocclusions for 2D+depth representation of multi-view images. **CARLOS VASQUEZ et al.** PROCEEDINGS OF THE TENTH IASTED INTERNATIONAL CONFERENCE ON COMPUTER GRAPHICS & IMAGING : FEBRUARY 13 - 15, 2008. ACTA PRESS, 13 February 2008, 26-33